# EUROPEAN PATENT SPECIFICATION

(11) **EP 3 929 453 B1**
(45) Date of publication and mention of the grant of the patent: **26.07.2023**
(21) Application number: 21179315.3
(22) Date of filing: 14.06.2021
(51) Int. Cl.: F16C 17/02, F16C 17/04, F16C 33/10, F25B 1/04

(54) **FOIL BEARING LUBRICATION**
FOLIENLAGERSCHMIERUNG
LUBRIFICATION DE PALIER À FEUILLES

(30) Priority: 24.06.2020 US 202062705372 P
(43) Date of publication of application: 29.12.2021
(73) Proprietor: Carrier Corporation, Palm Beach Gardens, FL 33418 (US)
(72) Inventor: SISHTLA, Vishnu M., Syracuse, 13221 (US); QIU, Yifan, Syracuse, 13221 (US)
(74) Representative: Dehns

(56) References cited:
- US-A1- 2009 044 548

## Description

Vapor compression systems (e.g., chillers) commonly include at least one compressor, a condenser, an expansion valve, and an evaporator. Refrigerant circulates through the vapor compression system in order to provide cooling to a medium (e.g., air). The refrigerant exits the compressor(s) through the discharge port(s) at a high pressure and a high enthalpy. The refrigerant then flows through the condenser at a high pressure and rejects heat to an external fluid medium. The refrigerant then flows through the expansion valve, which expands the refrigerant to a low pressure. After expansion, the refrigerant flows through the evaporator and absorbs heat from another medium (e.g., air). The refrigerant then re-enters the compressor(s) through the suction port(s), completing the cycle.

Compressors, like the one shown in US 2009/044548 A1 disclosing the preamble of claims 1 and 10, commonly include a motor rotor and a motor stator housed within a compressor housing. The rotor is fixed to and rotates with a rotating shaft, and the stator is fixed inside the compressor housing. Depending on the type of compressor, magnetic bearings or foil bearings may be used to support the rotating shaft while the compressor is operational. Magnetic bearings use electromagnets to levitate the rotating shaft. Foil bearings use pressurized gas to support the rotating shaft. Foil bearings have various advantages over magnetic bearings. For example, foil bearings can operate without the need for an external power supply or complicated control system, which, in turn, makes the foil bearings cheaper and less complex relative to the magnetic bearings.

When incorporated in a heating, ventilation, and air conditioning (HVAC) system, the pressurized gas used by the foil bearings may be working fluid (e.g., refrigerant) from the HVAC system. For example, when the HVAC system is operational, refrigerant in a predominately vapor state may be transferred from the HVAC system to the foil bearings. However, due to the low clearances and tolerances inherent in foil bearing design and assembly, if any of the refrigerant is left in a liquid state when transferred to the foil bearings the foil bearings may become damaged.

Accordingly, there remains a need for a way to prevent or at least mitigate any proportion of the working fluid from remaining in a liquid state when entering the foil bearings.

According to a first aspect the invention provides a compressor assembly including a motor, a foil bearing, a compression mechanism, a supply line, and a heating apparatus is provided. The motor is used for driving a rotating shaft. The foil bearing is used for supporting the rotating shaft. The compression mechanism is used for increasing a pressure of a working fluid. The compression mechanism is connected to the rotating shaft. The supply line is in fluid communication with the compression mechanism. The supply line is configured for injecting the working fluid toward the foil bearing when the compressor is operational. The heating apparatus is in fluid communication with the supply line. The heating apparatus is configured to heat the working fluid prior to being injected toward the foil bearing.

Optionally, the supply line is configured downstream of the compression mechanism.

Optionally, the compressor assembly further includes at least one sensor disposed in the supply line upstream of the heating apparatus, the at least one sensor configured to monitor a temperature of the working fluid.

Optionally, the heating apparatus is configured to heat the working fluid between 3°F (1.7°C) and 7°F (3.9°C) of superheat.

Optionally, the heating apparatus includes at least one of: an external heater, the motor, a condenser, and a discharge gas conduit.

Optionally, the working fluid includes a refrigerant.

According to another aspect the invention provides a vapor compression system including a condenser and a compressor assembly is provided. The condenser is used for transferring heat from a working fluid to an external fluid medium. The compressor assembly is in fluid communication with the condenser. The compressor assembly includes a motor, a foil bearing, a compression mechanism, a supply line, and a heating apparatus. The motor is used for driving a rotating shaft. The foil bearing is used for supporting the rotating shaft. The compression mechanism is used for increasing a pressure of a working fluid. The compression mechanism is connected to the rotating shaft. The supply line is in fluid communication with the compression mechanism. The supply line is configured for injecting the working fluid toward the foil bearing when the compressor is operational. The heating apparatus is in fluid communication with the supply line. The heating apparatus is configured to heat the working fluid prior to being injected toward the foil bearing.

Optionally, the vapor compression system further includes at least one sensor disposed in the supply line upstream of the heating apparatus, the at least one sensor configured to monitor a temperature of the working fluid.

Optionally, the working fluid is heated only when the working fluid has less than 3°F (1.7°C) of superheat.

Optionally, the supply line is configured downstream of the compression mechanism.

Optionally, the heating apparatus is configured to heat the working fluid between 3°F (1.7°C) and 7°F (3.9°C) of superheat.

Optionally, the heating apparatus includes at least one of: an external heater, the motor, the condenser, and a discharge gas conduit.

Optionally, the external fluid medium includes at least one of: an air supply and a water supply.

Optionally the working fluid includes a refrigerant.

According to another aspect the invention provides a method of operating a vapor compression system including a compressor and a condenser is provided. The compressor including a foil bearing for supporting a rotating shaft and a compression mechanism for increasing a pressure of a working fluid. The method includes a step for monitoring a temperature of the working fluid downstream of the compression mechanism. The method includes a step for injecting at least a portion of the working fluid from the compression mechanism toward the foil bearing, wherein the working fluid is heated prior to being injected toward the foil bearing when the working fluid has less than 3°F (1.7°C) of superheat.

Optionally, the method further provides for injecting the working fluid approximately continuously from the compression mechanism.

Optionally, the method further provides for heating the working fluid between 3°F (1.7°C) and 7°F (3.9°C) of superheat.

Optionally, the method further provides for heating the working fluid with at least one of: an external heater, the motor, the condenser, and a discharge gas conduit.

Optionally, the working fluid has between 1% and 5% liquid prior to being heated.

Optionally, the working fluid includes a refrigerant.

The present subject matter, which is regarded as the disclosure, is particularly pointed out and distinctly claimed in the claims at the conclusion of the specification. The following descriptions of the drawings should not be considered limiting in any way. With reference to the accompanying drawings, like elements are numbered alike:
FIG. 1 is a cross-sectional side view of a compressor depicting the injection of a working fluid toward a foil bearing.
FIG. 2 is a schematic illustration of a vapor compression system including a compressor and a condenser, with a supply line directing working fluid from a compression mechanism (e.g., an impeller) toward a foil bearing, where the working fluid is heated using an external heater.
FIG. 3 is a schematic illustration of a vapor compression system including a compressor and a condenser, with a supply line directing working fluid from a compression mechanism (e.g., an impeller) toward a foil bearing, where the working fluid is heated using the motor.
FIG. 4 is a schematic illustration of a vapor compression system including a compressor and a condenser, with a supply line directing working fluid from a compression mechanism (e.g., an impeller) toward a foil bearing, where the working fluid is heated using the condenser.
FIG. 5 is a schematic illustration of a vapor compression system including a compressor, a condenser, and an economizer, with a supply line directing working fluid from a compression mechanism (e.g., an impeller) toward a foil bearing, where the working fluid is heated using a discharge gas conduit.
FIG. 6 is a flow diagram illustrating a method of operating a vapor compression system including a compressor and a condenser.

As will be described below, a compressor with a supply line for injecting a working fluid (e.g., a refrigerant) toward the foil bearing(s) within the compressor, and a vapor compression system incorporating the same are provided. The foil bearing(s), commonly referred to as radial bearings or thrust bearings, described herein may be interpreted to include any hydrodynamic bearing(s) capable of utilizing a gas/vapor to support a rotating shaft of a compressor. As described below, the gas/vapor used by the foil bearing(s) may be working fluid from the compressor. For example, the foil bearing(s) may support the rotating shaft of the compressor by using a portion of the working fluid that is being pressurized by the compressor. The working fluid, in certain instances, is heated before being injected toward the foil bearing(s). The heating of the working fluid may make it possible to prevent, or at least mitigate, any proportion of the working fluid from remaining in a liquid state when entering the foil bearing(s), which may help reduce the likelihood of the foil bearing(s) becoming damaged.

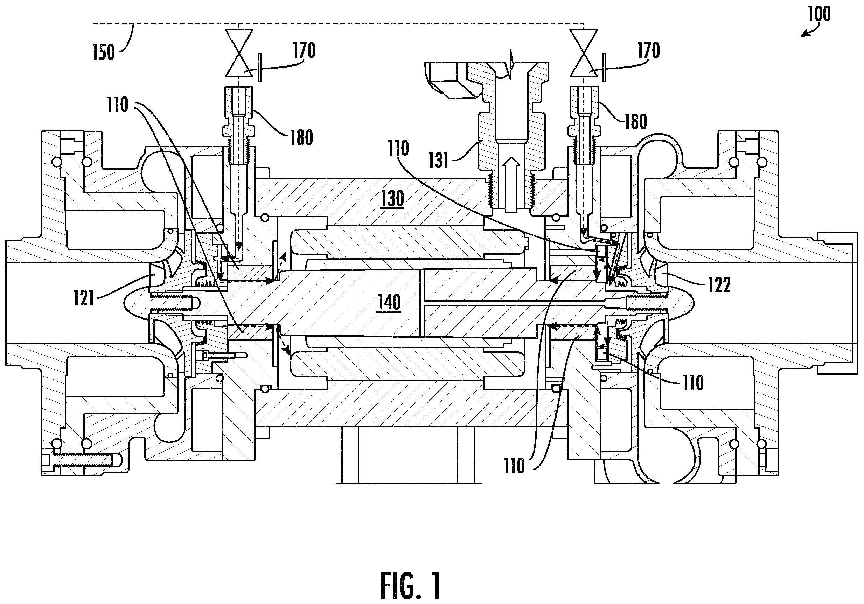

With reference now to the Figures, a cross-sectional side view of a compressor 100 illustrating the injection of a working fluid toward a foil bearing 110 is shown in FIG. 1. As shown in FIG. 1, the compressor 100 includes a motor 130, at least one foil bearing 110, a compression mechanism 121, and a supply line 150. It should be appreciated that the compression mechanism 121 may, in certain instances, be an impeller. As shown in FIG. 1, the compressor 100 may, in certain instances, be a two-stage compressor (e.g., including both a first compression mechanism 121 and a second compression mechanism 122). The motor 130 is used for driving a rotating shaft 140. The foil bearing 110 is used for supporting the rotating shaft 140. The compression mechanism 121 is used for increasing a pressure of a working fluid. The compression mechanism 121 is connected to the rotating shaft 140. The supply line 150 is in fluid communication with the compression mechanism 121. The supply line 150 is used for injecting a working fluid (e.g., through one or more nozzle 180) toward the foil bearing(s) 110. To avoid any proportion of the working fluid remaining in a liquid state, the working fluid may be heated prior to being injected toward the foil bearing(s) 110, as later described herein.

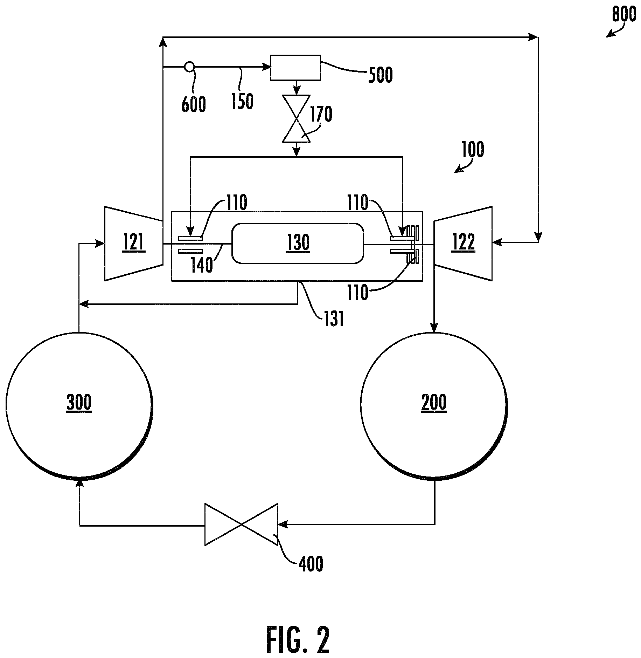

As shown in FIGs. 2-5, the compressor 100 may be one component of a vapor compression system 800. The vapor compression system 800 may include a compressor 100, a condenser 200, an expansion valve 400, and an evaporator 300. In some embodiments, the compressor 100 is either a centrifugal compressor, an axial compressor, a scroll compressor, or a screw compressor. The vapor compression system 800 may be configured to circulate working fluid (e.g., refrigerant, such as R-134A) through the vapor compression system 800 to provide cooling to a medium (e.g., air, water, etc.). It will be appreciated that other types of refrigerant may be used. As shown in FIGs. 2-5, the working fluid being injected toward the foil bearing(s) 110 of the compressor 100 may be provided from downstream of the compression mechanism 121. From downstream of the compression mechanism 121 may be interpreted to mean that the supply line 150 may be configured downstream of the compression mechanism 121 so as to withdraw working fluid after the working fluid exits the compression mechanism 121 (e.g., outside of the compression region of the compression mechanism 121). The working fluid may be in a substantially vapor state when exiting the compression mechanism 121. A substantially vapor state can be interpreted to mean that more of the working fluid is in a vapor state than a liquid state. However, 1% to 5% of the working fluid may be in the liquid state (with the remaining amount of the working fluid being in the vapor state). As mentioned above, if any proportion of the working fluid remains in a liquid state when entering the foil bearing(s) 110 the foil bearing(s) 110 may be damaged. Accordingly, it may be advantageous to ensure that temperature of the working fluid is above its boiling point (e.g., at least 3°F (1.7°C) above boiling).

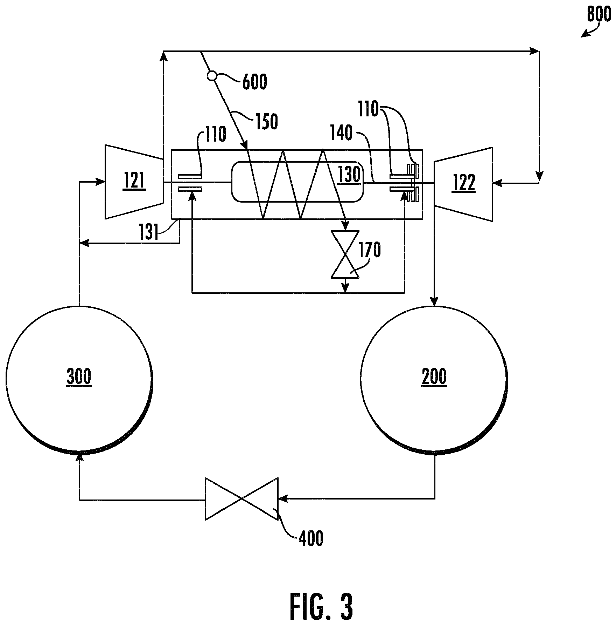

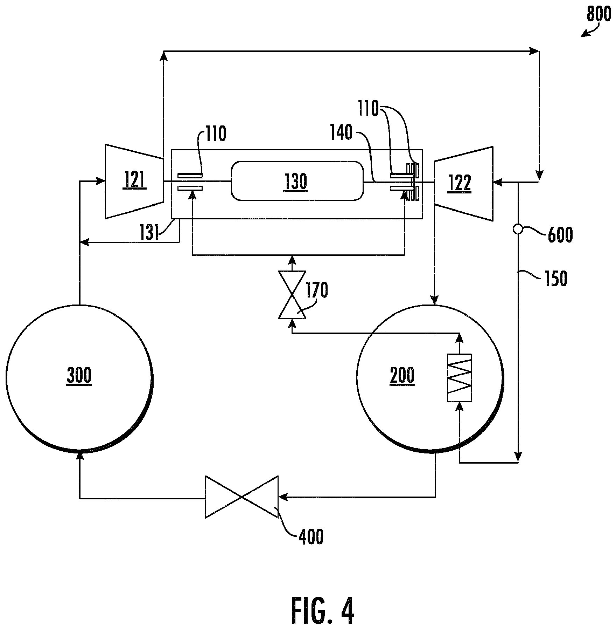

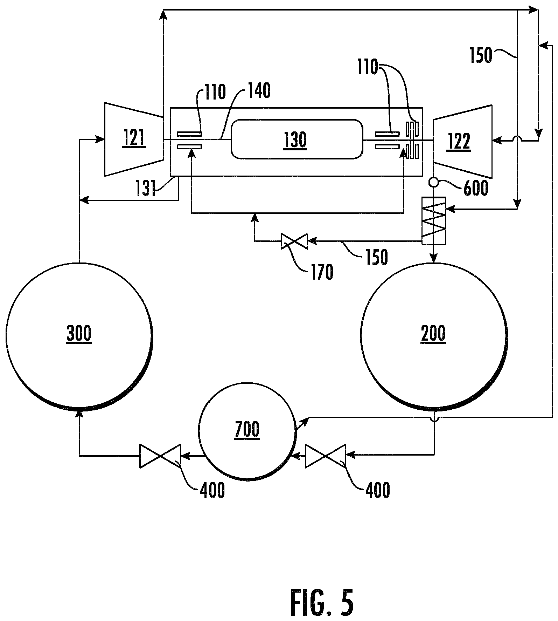

To ensure that the temperature of the working fluid is above its boiling point (e.g., by at least 3°F (1.7°C)), in certain instances, the working fluid must be heated (e.g., using a heating apparatus). This heating apparatus may include at least one of: an external heater 500 (as shown in FIG. 2), the motor 130 (as shown in FIG. 3), the condenser 200 (as shown in FIG. 4), and a discharge gas conduit (as shown in FIG. 5). It should be appreciated that in certain instances more than one method of heating the working fluid may be used. Regardless of how the working fluid is heated, in certain instances, the working fluid is heated between 3°F (1.7°C) and 7°F (3.9°C) of superheat.

FIG. 2 is a schematic illustration of a vapor compression system 800 including a compressor 100, a condenser 200, an expansion valve 400, and an evaporator 300, with a supply line 150 directing working fluid from a compression mechanism 121 toward the foil bearing(s) 110, where the working fluid is heated using an external heater 500. The compressor 100 shown is two-stage compressor (e.g., including both a first compression mechanism 121 and a second compression mechanism 122). It should be appreciated that the supply line 150 may, in certain instances, be in fluid communication with either or both the first compression mechanism 121 and the second compression mechanism 122. As shown, the working fluid is transferred to the compressor 100 from the evaporator 300, where it enters the first compression mechanism 121. A portion of the working fluid from the first compression mechanism 121 may be transferred (via the supply line 150) toward the foil bearing(s) 110, with the remaining amount being transferred to the second compression mechanism 122. To regulate the flow of the working fluid toward the foil bearing(s), the supply line 150 may include a valve 170. This valve 170 may be downstream of the external heater 500. In certain instances, the external heater 500 is an electric heater (e.g., consuming electricity as an energy source) or a combustion-based heater (e.g., consuming natural gas as an energy source). Once heated by the external heater 500, the working fluid is injected toward the foil bearing(s) 110. The working fluid, once used by the foil bearing(s) 110, may exit the motor 130 through a drain 131 in the motor 130. This working fluid may enter the first compression mechanism 121 along with the working fluid from the evaporator 300.

FIG. 3 is a schematic illustration of a vapor compression system 800 including a compressor 100, a condenser 200, an expansion valve 400, and an evaporator 300, with a supply line 150 directing working fluid from a compression mechanism 121 toward the foil bearing(s) 110, where the working fluid is heated using the motor 130 of the compressor 100. The compressor 100 shown is two-stage compressor (e.g., including both a first compression mechanism 121 and a second compression mechanism 122). It should be appreciated that the supply line 150 may, in certain instances, be in fluid communication with either or both the first compression mechanism 121 and the second compression mechanism 122. As shown, the working fluid is transferred to the compressor 100 from the evaporator 300, where it enters the first compression mechanism 121. A portion of the working fluid from the first compression mechanism 121 may be transferred (via the supply line 150) toward the foil bearing(s) 110, with the remaining amount being transferred to the second compression mechanism 122. To regulate the flow of the working fluid toward the foil bearing(s), the supply line 150 may include a valve 170. This valve 170 may be downstream of the motor 130. In certain instances, the supply line 150 is configured to flow working fluid close enough to (or within) the motor 130 that the working fluid can transfer heat from the motor 130. In various instances, the motor 130 may generate enough heat that the working fluid may be heated to at least 3°F (1.7°C) beyond its boiling point. Once heated by the motor 130, the working fluid is injected toward the foil bearing(s) 110. The working fluid, once used by the foil bearing(s) 110, may exit the motor 130 through a drain 131 in the motor 130. This working fluid may enter the first compression mechanism 121 along with the working fluid from the evaporator 300.

FIG. 4 is a schematic illustration of a vapor compression system 800 including a compressor 100, a condenser 200, an expansion valve 400, and an evaporator 300, with a supply line 150 directing working fluid from a compression mechanism 121 toward the foil bearing(s) 110, where the working fluid is heated using the condenser 200. The compressor 100 shown is two-stage compressor (e.g., including both a first compression mechanism 121 and a second compression mechanism 122). It should be appreciated that the supply line 150 may, in certain instances, be in fluid communication with either or both the first compression mechanism 121 and the second compression mechanism 122. As shown, the working fluid is transferred to the compressor 100 from the evaporator 300, where it enters the first compression mechanism 121. A portion of the working fluid from the first compression mechanism 121 may be transferred (via the supply line 150) toward the foil bearing(s) 110, with the remaining amount being transferred to the second compression mechanism 122. To regulate the flow of the working fluid toward the foil bearing(s) 110, the supply line 150 may include a valve 170. This valve 170 may be downstream of the condenser 200. In certain instances, the supply line 150 is configured to flow working fluid close enough to (or within) the condenser 200 that the working fluid can transfer heat from the condenser 200. In various instances, the condenser 200 may generate enough heat that the working fluid may be heated to at least 3°F (1.7°C) beyond its boiling point. Once heated by the condenser 200, the working fluid is injected toward the foil bearing(s) 110. The working fluid, once used by the foil bearing(s) 110, may exit the motor 130 through a drain 131 in the motor 130. This working fluid may enter the first compression mechanism 121 along with the working fluid from the evaporator 300.

FIG. 5 is a schematic illustration of a vapor compression system 800 including a compressor 100, a condenser 200, an expansion valve 400 on either side of an economizer 700 (e.g., which may be either a flash economizer 700 or a subcooling economizer 700), and an evaporator 300, with a supply line 150 directing working fluid from a compression mechanism 121 toward the foil bearing(s) 110, where the working fluid is heated using a discharge gas conduit (e.g., from a second compression mechanism 122). The compressor 100 shown is two-stage compressor (e.g., including both a first compression mechanism 121 and a second compression mechanism 122). It should be appreciated that the supply line 150 may, in certain instances, be in fluid communication with either or both the first compression mechanism 121 and the second compression mechanism 122. As shown, the working fluid is transferred to the compressor 100 from the evaporator 300, where it enters the first compression mechanism 121. A portion of the working fluid from the first compression mechanism 121 may be transferred (via the supply line 150) toward the foil bearing(s) 110, with the remaining amount being transferred to the second compression mechanism 122. To regulate the flow of the working fluid toward the foil bearing(s) 110, the supply line 150 may include a valve 170. This valve 170 may be downstream of the location where the working fluid is heated by the discharge gas conduit (e.g., from the second compression mechanism 122). In certain instances, the supply line 150 is configured to flow working fluid close enough to (or within) the discharge pipe of the second compression mechanism 122 so that the working fluid can transfer heat from the discharge gas conduit. In various instances, the discharge gas conduit may generate enough heat that the working fluid may be heated to at least 3°F (1.7°C) beyond its boiling point. Once heated by the discharge gas conduit, the working fluid is injected toward the foil bearing(s) 110. The working fluid, once used by the foil bearing(s) 110, may exit the motor 130 through a drain 131 in the motor 130. This working fluid may enter the first compression mechanism 121 along with the working fluid from the evaporator 300.

Regardless of how heated, the working fluid may be injected toward the foil bearing(s) 110 approximately continuously by the supply line 150 when the compressor 100 is operational. In certain instances, the compressor 100 is the driving force for injecting the working fluid toward the foil bearing(s) 110. Meaning that when the compressor 100 is operational the compressor 100, through generating a positive pressure, forces the working fluid toward the foil bearing(s) 110. In certain instances (e.g., when the compressor 100 is the driving force for injecting the working fluid toward the foil bearing(s) 110), the injecting of the working fluid stops when the compressor 100 is shutdown. This may be because, when the compressor 100 is shutdown there is no positive pressure being generated that would force the working fluid toward the foil bearing(s) 110. The compressor 100 may be seen as shutdown when the compressor 100 is not generating a positive pressure. The compressor 100 may be seen as being operational when the compressor 100 is generating a positive pressure.

It is envisioned that in certain instances it may not be necessary to heat the working fluid before being injected toward the foil bearing(s) 110. For example, it may not be necessary to heat the working fluid if the temperature of the working fluid is already at least 3°F (1.7°C) beyond its boiling point. Accordingly, the vapor compression system 800 may include at least one sensor 600 to monitor the temperature of the working fluid before it is heated (e.g., include a sensor 600 upstream of the external heater 500, motor 130, the condenser 200, and/or the discharge gas conduit from the second compression mechanism 122). This sensor 600 may include any technology capable of measuring the temperature of the working fluid. In certain instances, the sensor 600 is a temperature probe placed in the supply line 150. This sensor 600 may determine whether the temperature of the working fluid is already at least 3°F (1.7°C) beyond its boiling point. If the temperature of the working fluid is already at least 3°F (1.7°C) beyond its boiling point, the heating may be avoided (e.g., the external heater 500 may be turned off, or the working fluid may be routed by the supply line 150 to avoid the heating source (e.g., the external heater 500, motor 130, the condenser 200, and/or the discharge gas conduit from the second compression mechanism 122).

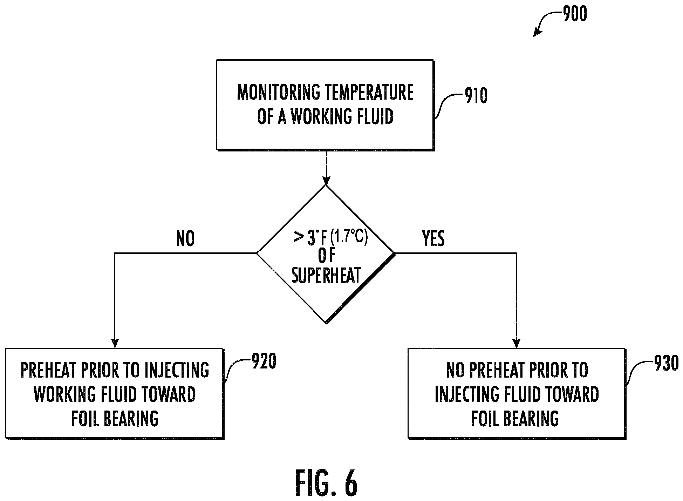

An exemplary method 900 of operating a vapor compression system 800 is illustrated in FIG. 6. The method 900 may be performed, for example, using the exemplary vapor compression system 800 shown in FIGs. 2-5, which may include the exemplary compressor 100 shown in FIG. 1. As shown in FIG. 1, the compressor 100 may include a foil bearing 110 for supporting a rotating shaft 140 and a compression mechanism 121 for increasing a pressure of a working fluid. The method 900 provides step 910 for monitoring a temperature of the working fluid downstream of the compression mechanism 121. If the working fluid has less than 3°F (1.7°C) of superheat, the method 900 provides for the heating of the working fluid before being injected toward the foil bearing 110. If the working fluid has greater than 3°F (1.7°C) of superheat, the method 900 provides step 920 of not heating the working fluid before being injected toward the foil bearing 110. As described above, the working fluid may be heated by at least one of: an external heater 500, the motor 130, the condenser 200, and a discharge gas conduit (e.g., from the second compression mechanism 122). In certain instances, the working fluid is heated to between 3°F (1.7°C) and 7°F (3.9°C) of superheat. This heating of the working fluid may ensure that all of the working fluid is in a vapor state prior to being injected in the foil bearing 110, which may help to prevent the foil bearing(s) 110 from becoming damaged.

The use of the terms "a" and "and" and "the" and similar referents, in the context of describing the invention, are to be construed to cover both the singular and the plural, unless otherwise indicated herein or cleared contradicted by context. The use of any and all example, or exemplary language (e.g., "such as", "e.g.", "for example", etc.) provided herein is intended merely to better illuminate the invention and does not pose a limitation on the scope of the invention unless otherwise claimed. No language in the specification should be construed as indicating any non-claimed elements as essential to the practice of the invention.

While the present invention has been described with reference to an exemplary embodiment or embodiments, it will be understood by those skilled in the art that various changes may be made and equivalents may be substituted for elements thereof without departing from the scope of the present invention, as defined by the claims. In addition, many modifications may be made to adapt a particular situation or material to the teachings of the present invention without departing from the scope of the claims. Therefore, it is intended that the present invention not be limited to the particular embodiment disclosed as the best mode contemplated for carrying out this present invention, but that the present disclosure will include all embodiments falling within the scope of the claims.

## Claims

1. A compressor assembly comprising:
a motor (130) for driving a rotating shaft (140);
a foil bearing (110) for supporting the rotating shaft;
a compression mechanism (121) for increasing a pressure of a working fluid, the compression mechanism connected to the rotating shaft; and
a supply line (150) in fluid communication with the compression mechanism, the supply line configured for injecting the working fluid toward the foil bearing when the compressor assembly (100) is operational;
**characterized in that** the compressor assembly further includes a heating apparatus in fluid communication with the supply line, wherein the heating apparatus is configured to heat the working fluid prior to being injected toward the foil bearing.

2. The compressor assembly of claim 1, wherein the supply line (150) is configured downstream of the compression mechanism (121).

3. The compressor assembly of claim 1, further comprising at least one sensor (600) disposed in the supply line (150) upstream of the heating apparatus, the at least one sensor configured to monitor a temperature of the working fluid.

4. The compressor assembly of claim 3, wherein the working fluid is heated only when the working fluid comprises less than 3°F (1.7°C) of superheat.

5. The compressor assembly of claim 1, wherein the heating apparatus is configured to heat the working fluid between 3°F (1.7°C) and 7°F (3.9°C) of superheat.

6. The compressor assembly of claim 1, wherein the heating apparatus comprises at least one of: an external heater (500), the motor (130), a condenser (200), and a discharge gas conduit.

7. The compressor assembly of claim 1, wherein the working fluid comprises a refrigerant.

8. A vapor compression system (800) comprising:
a condenser (200) for transferring heat from a working fluid to an external fluid medium; and
the compressor assembly of any preceding claim in fluid communication with the condenser.

9. The vapor compression system of claim 8, wherein the external fluid medium is comprised of at least one of: an air supply and a water supply.

10. A method of operating a vapor compression system (800) comprising a compressor (100) and a condenser (200), the compressor comprising a foil bearing (110) for supporting a rotating shaft (140) and a compression mechanism (121) for increasing a pressure of a working fluid, the method comprising:
monitoring a temperature of the working fluid downstream of the compression mechanism; and
injecting at least a portion of the working fluid from the compression mechanism toward the foil bearing, **characterized in that**
the working fluid is heated prior to being injected toward the foil bearing when the working fluid comprises less than 3°F (1.7°C) of superheat.

11. The method of claim 10, further comprising injecting the working fluid approximately continuously from the compression mechanism (121).

12. The method of claim 10, further comprising heating the working fluid to between 3°F (1.7°C) and 7°F (3.9°C) of superheat.

13. The method of claim 12, further comprising heating the working fluid with at least one of: an external heater (500), the motor (130), the condenser (200), and a discharge gas conduit.

14. The method of claim 10, wherein the working fluid comprises between 1% and 5% liquid prior to being heated.

15. The method of claim 10, wherein the working fluid comprises a refrigerant.

## Patentansprüche

1. Kompressoranordnung, die Folgendes umfasst:
einen Motor (130) zum Antreiben einer Drehwelle (140);
ein Folienlager (110) zum Tragen der Drehwelle;
einen Kompressionsmechanismus (121) zum Erhöhen eines Drucks eines Arbeitsfluids, wobei der Kompressionsmechanismus mit der Drehwelle verbunden ist;
eine Versorgungsleitung (150) in strömungstechnischer Kommunikation mit dem Kompressionsmechanismus, wobei die Versorgungsleitung zum Einspritzen des Arbeitsfluids in Richtung des Folienlagers konfiguriert ist, wenn die Kompressoranordnung (100) in Betrieb ist,
**dadurch gekennzeichnet, dass** die Kompressoranordnung weiter
eine Heizeinrichtung in strömungstechnischer Kommunikation mit der Versorgungsleitung einschließt, wobei die Heizeinrichtung so konfiguriert ist, dass sie das Arbeitsfluid erwärmt, bevor es in Richtung des Folienlagers eingespritzt wird.

2. Kompressoranordnung nach Anspruch 1, wobei die Versorgungsleitung (150) stromabwärts des Kompressionsmechanismus (121) konfiguriert ist.

3. Kompressoranordnung nach Anspruch 1, weiter umfassend mindestens einen Sensor (600), der in der Versorgungsleitung (150) stromaufwärts der Heizeinrichtung angeordnet ist, wobei der mindestens eine Sensor so konfiguriert ist, dass er eine Temperatur des Arbeitsfluids überwacht.

4. Kompressoranordnung nach Anspruch 3, wobei das Arbeitsfluid nur erwärmt wird, wenn das Arbeitsfluid weniger als 1,7°C (3°F) Überhitzung umfasst.

5. Kompressoranordnung nach Anspruch 1, wobei die Heizeinrichtung so konfiguriert ist, dass sie das Arbeitsfluid auf eine Überhitzung zwischen 1,7°C (3°F) und 3,9°C (7°F) erwärmt.

6. Kompressoranordnung nach Anspruch 1, wobei die Heizeinrichtung mindestens eines der Folgenden umfasst: einen externen Erhitzer (500), den Motor (130), einen Verflüssiger (200) und eine Entladungsgasleitung.

7. Kompressoranordnung nach Anspruch 1, wobei das Arbeitsfluid ein Kältemittel umfasst.

8. Dampfkompressionssystem (800), umfassend:
einen Verflüssiger (200) zum Übertragen von Wärme von einem Arbeitsfluid auf ein externes Fluidmedium; und
die Kompressoranordnung nach einem vorstehenden Anspruch in strömungstechnischer Kommunikation mit dem Verflüssiger.

9. Dampfkompressionssystem nach Anspruch 8, wobei das externe Fluidmedium mindestens eines der Folgenden umfasst: eine Luftversorgung und eine Wasserversorgung.

10. Verfahren zum Betreiben eines Dampfkompressionssystems (800), das einen Kompressor (100) und einen Verflüssiger (200) umfasst, wobei der Kompressor ein Folienlager (110) zum Tragen einer Drehwelle (140) und einen Kompressionsmechanismus (121) zum Erhöhen eines Drucks eines Arbeitsfluids umfasst, wobei das Verfahren Folgendes umfasst:
Überwachen einer Temperatur des Arbeitsfluids stromabwärts des Kompressionsmechanismus; und
Einspritzen mindestens eines Teils des Arbeitsfluids aus dem Kompressionsmechanismus in Richtung des Folienlagers, **dadurch gekennzeichnet, dass**
das Arbeitsfluid vor dem Einspritzen in Richtung des Folienlagers erwärmt wird, wenn das Arbeitsfluid weniger als 1,7°C (3°F) Überhitzung umfasst.

11. Verfahren nach Anspruch 10, weiter umfassend das Einspritzen des Arbeitsfluids in etwa kontinuierlicher Weise aus dem Kompressionsmechanismus (121).

12. Verfahren nach Anspruch 10, weiter umfassend das Erwärmen des Arbeitsfluids auf eine Überhitzung zwischen 1,7°C (3°F) und 3,9°C (7°F).

13. Verfahren nach Anspruch 12, weiter umfassend das Erwärmen des Arbeitsfluids mit mindestens einem von: einem externen Erhitzer (500), dem Motor (130), dem Verflüssiger (200) und einer Entladungsgasleitung.

14. Verfahren nach Anspruch 10, wobei das Arbeitsfluid vor dem Erwärmen zwischen 1% und 5% Flüssigkeit umfasst.

15. Verfahren nach Anspruch 10, wobei das Arbeitsfluid ein Kältemittel umfasst.

## Revendications

1. Ensemble compresseur comprenant :
un moteur (130) pour entraîner un arbre rotatif (140) ;
un palier à feuilles (110) pour supporter l'arbre rotatif ;
un mécanisme de compression (121) pour augmenter une pression d'un fluide de travail, le mécanisme de compression étant relié à l'arbre rotatif ;
une conduite d'alimentation (150) en communication fluidique avec le mécanisme de compression, la conduite d'alimentation étant configurée pour injecter le fluide de travail vers le palier à feuilles lorsque l'ensemble compresseur (100) est opérationnel,
**caractérisé en ce que** l'ensemble compresseur inclut en outre
un appareil de chauffage en communication fluidique avec la conduite d'alimentation, dans lequel l'appareil de chauffage est configuré pour chauffer le fluide de travail avant qu'il soit injecté vers le palier à feuilles.

2. Ensemble compresseur selon la revendication 1, dans lequel la conduite d'alimentation (150) est configurée en aval du mécanisme de compression (121).

3. Ensemble compresseur selon la revendication 1, comprenant en outre au moins un capteur (600) disposé dans la conduite d'alimentation (150) en amont de l'appareil de chauffage, le au moins un capteur étant configuré pour surveiller une température du fluide de travail.

4. Ensemble compresseur selon la revendication 3, dans lequel le fluide de travail est uniquement chauffé lorsque le fluide de travail comprend moins de 3 °F (1,7 °C) de surchauffe.

5. Ensemble compresseur selon la revendication 1, dans lequel l'appareil de chauffage est configuré pour chauffer le fluide de travail entre 3 °F (1,7 °C) et 7 °F (3,9 °C) de surchauffe.

6. Ensemble compresseur selon la revendication 1, dans lequel l'appareil de chauffage comprend au moins un parmi : un réchauffeur externe (500), le moteur (130), un condenseur (200) et un conduit de gaz de refoulement.

7. Ensemble compresseur selon la revendication 1, dans lequel le fluide de travail comprend un frigorigène.

8. Système de compression de vapeur (800) comprenant :
un condenseur (200) pour transférer de la chaleur d'un fluide de travail à un milieu fluide externe ; et
l'ensemble compresseur selon l'une quelconque des revendications précédentes en communication fluidique avec le condenseur

9. Système de compression de vapeur selon la revendication 8, dans lequel le milieu fluide externe est composé d'au moins une parmi : une alimentation en air et une alimentation en eau.

10. Procédé de fonctionnement d'un système de compression de vapeur (800) comprenant un compresseur (100) et un condenseur (200), le compresseur comprenant un palier à feuilles (110) pour supporter un arbre rotatif (140) et un mécanisme de compression (121) pour augmenter une pression d'un fluide de travail, le procédé comprenant :
la surveillance d'une température du fluide de travail en aval du mécanisme de compression ; et
l'injection d'au moins une partie du fluide de travail à partir du mécanisme de compression vers le palier à feuilles, **caractérisé en ce que**
le fluide de travail est chauffé avant d'être injecté vers le palier à feuilles lorsque le fluide de travail comprend moins de 3 °F (1,7 °C) de surchauffe.

11. Procédé selon la revendication 10, comprenant en outre l'injection du fluide de travail à peu près en continu à partir du mécanisme de compression (121).

12. Procédé selon la revendication 10, comprenant en outre le chauffage du fluide de travail entre 3 °F (1,7 °C) et 7 °F (3,9 °C) de surchauffe.

13. Procédé selon la revendication 12, comprenant en outre le chauffage du fluide de travail avec au moins un parmi : un réchauffeur externe (500), le moteur (130), le condenseur (200) et un conduit de gaz de refoulement.

14. Procédé selon la revendication 10, dans lequel le fluide de travail comprend entre 1 % et 5 % de liquide avant d'être chauffé.

15. Procédé selon la revendication 10, dans lequel le fluide de travail comprend un frigorigène.
